# EUROPÄISCHE PATENTANMELDUNG

(11) **EP 0 631 905 A1**
(43) Veröffentlichungstag der Anmeldung: **04.01.1995**
(21) Anmeldenummer: 94103644.4
(22) Anmeldetag: 10.03.1994
(51) Int. Cl.: B60R 13/08, B60R 13/02

(54) **Verkleidungselement**

(30) Priorität: 29.06.1993 DE 4321551
(71) Anmelder: Firma Carl Freudenberg, D-69469 Weinheim (DE)
(72) Erfinder: Stief, Reinhard, D-69469 Weinheim (DE); Müller, Christoph, D-69509 Mörlenbach (DE); Schork, Roger, D-69509 Mörlenbach (DE); Jost, Thomas, D-69469 Weinheim (DE); Müller Broll, Gerhard, Dr., D-69668 Rimbach (DE); Bickel, Klaus, D-64658 Fürth (DE); Carocci, Jürgen, D-69198 Schriesheim (DE)

(57) **Zusammenfassung**

Verkleidungselement zur Isolierung akustisch störender Schwingungen, umfassend einen geschlossenzelligen Schaumstoffkörper (1) zum Verschließen eines auf zumindest einer Seite mit einer Öffnung (2) versehenen Hohlkörpers (3), wobei der Schaumstoffkörper (1) eine Befestigungsvorrichtung (4) aufweist und an dem Hohlkörper (3) festlegbar ist. Der Schaumstoffkörper (1) weist eine an die Form der Öffnung (2) angepaßte Gestalt auf und auf der der Begrenzung (5) der Öffnung (2) zugewandten Umfangsseite (6) die Befestigungsvorrichtung (4), wobei die Befestigungsvorrichtung (4) durch eine in sich geschlossen umlaufende, in Richtung der Begrenzung (5) offene Nut (7) gebildet ist und wobei die Nut (7) und die Begrenzung (5) dichtend und formschlüssig miteinander in Eingriff bringbar sind.

## Beschreibung

Die Erfindung betrifft ein Verkleidungselement zur Isolierung akustisch störender Schwingungen, umfassend einen geschlossenzelligen Schaumstoffkörper zum Verschließen eines auf zumindest einer Seite mit einer Öffnung versehenen Hohlkörpers, wobei der Schaumstoffkörper eine Befestigungsvorrichtung aufweist und an den Hohlkörper festlegbar ist.

Ein derartiges Verkleidungselement ist aus der EP-A-0 290 399 bekannt. Es besteht aus einer Türverkleidung für Kraftfahrzeuge, die mehrteilig ausgebildet ist, wobei Aussparungen innerhalb der Verkleidung vorgesehen sind, in denen der Schaumstoffkörper befestigt wird. Die Befestigung erfolgt durch Stifte, die auf der dem Innenraum abgewandten Seite der Verkleidung einstückig angeformt sind und entsprechend angeordnete Öffnungen des Schaumstoffkörpers formschlüssig durchdringen. Dabei ist allerdings zu beachten, daß die Isolierung akustisch störender Schwingungen durch die Größe und Anordnung der Schaumstoffkörper wenig befriedigend ist.

Der Erfindung liegt die Aufgabe zugrunde, ein solches Verkleidungselement derart weiter zu entwickeln, daß akustisch störende Schwingungen besser isoliert werden und daß es einer separaten Abdichtung der Öffnung des Hohlkörpers gegen die Umgebung nicht bedarf. Das Verkleidungselement wirkt gleichzeitig als Schutzfunktion gegen Wind und Nässe.

Diese Aufgabe wird erfindungsgemäß mit den kennzeichnenden Merkmalen von Anspruch 1 gelöst. Auf vorteilhafte Ausgestaltungen nehmen die Unteransprüche bezug.

Zur Lösung der Aufgabe ist es vorgesehen, daß der Schaumstoffkörper eine an die Form der Öffnung angepaßte Gestalt aufweist und auf der der Begrenzung der Öffnung zugewandten Umfangsseite die Befestigungsvorrichtung, daß die Befestigungsvorrichtung durch eine in sich geschlossen umlaufende, in Richtung der Begrenzung offene Nut gebildet ist und daß die Nut und die Begrenzung dichtend und formschlüssig miteinander in Eingriff bringbar sind. Hierbei ist von Vorteil, daß die Öffnung des Hohlkörpers durch den Schaumstoffkörper vollständig verschlossen ist. Die Isolierung akustisch störender Schwingungen ist dadurch wesentlich verbessert. Außerdem bedarf es, insbesondere wenn es sich bei dem Hohlkörper um Fahrzeugtüren handelt, keiner separaten Abdichtung gegenüber der Innenraumverkleidung. Eine derartige Abdichtung wurde bisher zumeist durch Folien erreicht, die mit einer um die Öffnung umlaufenden Klebefläche versehen waren. Neben einer umständlichen Handhabung war die Klebefläche mit einem Trennpapier oder einer Trennfolie abgedeckt, die unmittelbar vor der Montage entfernt werden mußte. Dieses System verursachte große Abfallmengen. Außerdem war eine Justierung der Folie im Anschluß an die Montage nicht mehr möglich. Durch die in sich geschlossene Nut, die dichtend und formschlüssig mit der Begrenzung in Eingriff bringbar ist, ist eine zuverlässige Abdichtung, beispielsweise gegen Spritz- und Kondenswasser bedingt. Ferner ist die Montage des Verkleidungselements am Hohlkörper einfach möglich, wobei eine Justierung im Anschluß an die Montage jeder Zeit möglich ist. Außerdem ist von vorzuhebender Bedeutung, daß eine Demontage des Verkleidungselements vom Hohlkörper zerstörungsfrei erfolgen kann, so daß das Verkleidungselement ohne Aufarbeitung mehrmals verwendbar ist. Der Schaumstoffkörper kann beispielsweise aus Polyethylen oder Polypropylen bestehen.

Die Nut kann ein im wesentlichen U-förmiges Profil aufweisen, wobei zumindest eine ihrer einander zugewandten Begrenzungsflächen zumindest eine Dichtlippe aufweist, die die Öffnung des Hohlkörpers dichtend umschließt. Durch diese Ausgestaltung ist eine vergrößerte Sicherheit gegen Feuchtigkeitsaustritt aus dem Hohlkörper in Richtung der Innenverkleidung gewährleistet. Eine solche Ausgestaltung ist immer dann von Vorteil, wenn auf der dem Hohlkörper abgewandten Seite der Umgebung Feuchtigkeit unerwünscht ist. Gelangt das erfindungsgemäße Verkleidungselement beispielsweise im Bereich von Fahrzeugtüren zur Anwendung, muß gewährleistet sein, daß Wasser, das an den Fenstern vorbei in die Tür sickert und Spritzwasser, das von unten in die Tür eindringen kann, sicher von der Innenraumverkleidung ferngehalten wird, um eine Beschädigung oder eine Zerstörung zu verhindern.

Der Schaumstoffkörper kann auf der dem Hohlkörper abgewandten Seite mit einem Bestandteil einer Innenraumverkleidung eines Fahrzeugs verbunden sein. Die Innenraumverkleidung kann beispielsweise durch eine Türverkleidung gebildet sein. Durch die flüssigkeitsdichte Befestigung des Schaumstoffkörpers innerhalb der Öffnung des Hohlkörpers können als Türverkleidung auch wenig feuchtigkeitsbeständige Materialien zur Anwendung gelangen, beispielsweise ein Formte aus verfestigtem Baumwollfaservliesstoff. Eine Beaufschlagung des Formteils mit Feuchtigkeit aus dem Hohlraum wird durch die dichtende Verbindung des Schaumstoffkörpers an der Begrenzung ausgeschlossen. Da die Nut des Schaumstoffkörpers die Begrenzung des Hohlkörpers unter elastischer Vorspannung dichtend umschließt, ist eine gute Abdichtung auch während einer langen Gebrauchsdauer gewährleistet.

Hinsichtlich einer vereinfachten Handhabung und Montage können der Schaumstoffkörper und die Innenraumverkleidung eine vormontierbare Einheit bilden und gemeinsam in den Hohlkörper einschnappbar sein. Hierbei ist von Vorteil, daß der Schaumstoffkörper und die Innenraumverkleidung auch als Einheit demontiert werden können, beispielsweise um Reparaturen an / in der Fahrzeugtür vornehmen zu können. Das Einschnappen des Schaumstoffkörpers in die Öffnung des Hohlkörpers erfolgt durch eine elastische Verformung der Außenumfangsseite, in der die Nut angeordnet ist. Der Schaumstoffkörper kann in seinem Randbereich derart angeschrägt sein, daß er zunächst in die Öffnung des Hohlkörpers eingesetzt werden kann um eine vorläufige Positionierung vornehmen zu können und anschließend solange in Richtung des Hohlkörpers bewegt wird, bis er mit seiner Nut in die Begrenzung der Öffnung einschnappt.

Der Schaumstoffkörper und die Innenraumverkleidung können einander mit Abstand benachbart zugeordnet sein, wobei der Schaumstoffkörper einstückig angeformte Abstandhalter aufweist, die die Innenraumverkleidung unter elastischer Vorspannung anliegend berühren. Hierbei ist von Vorteil, daß die Innenraumverkleidung große Öffnungsquerschnitte überspannen kann, ohne daß sie ihre Form verliert.

Die Abstandhalter können zur Bildung von Helmholzresonatoren topfförmig gestaltet sein, wobei die einander benachbarten Helmholzresonatoren von einander abweichende Volumina umschließen und mit Durchbrechungen voneinander abweichender Größe versehen sind. Hierbei ist von Vorteil, daß Luftschall verschiedener Frequenzen absorbiert werden kann. Die Helmholzresonatoren können beispielsweise flächendeckend im Bereich der Öffnung angeordnet sein, wobei identische Helmholzresonatoren einander mit Abstand benachbart zugeordnet sind und dazwischen abweichende Resonatoren ausgebildet sind. Dadurch wird erreicht, daß sich der Wirkungsradius gleicher Resonatoren nicht überschneidet und dadurch eine gute Schallabsorbtion bedingt ist. Auf der der Innenraumverkleidung zugewandten Seite des Schaumstoffkörpers ist als Begrenzung der Helmholzresonatoren auf der den Durchbrechungen abgewandten Seite eine Folie vorgesehen, die mit dem Schaumstoffkörper adhäsiv verbunden ist. Die Folie ist vorgesehen, um Feuchtigkeit, die durch die Durchbrechungen der Helmholzresonatoren eindringen kann, von der Innenraumverkleidung fern zu halten. Mehrere Ausführungsbeispiele des erfindungsgemäßen Verkleidungselements werden nachfolgend an Hand der beigefügten Zeichnungen näher erläutert.

In Figur 1 ist ein erstes Ausführungsbeispiel des erfindungsgemäßen Verkleidungselements gezeigt, das an einer Kraftfahrzeugtür befestigt ist. In Figur 2 ist ein zweites Ausführungsbeispiel gezeigt, das in die Öffnung der Tür einschnappbar ist, wobei der Schaumstoffkörper mit einem Abstandhalter an der Innenraumverkleidung der Tür abgestützt ist.

In Figur 3 ist ein drittes Ausführungsbeispiel gezeigt. Der Schaumstoffkörper ist mit Helmholtzresonatoren versehen und auf der der Innenraumverkleidung zugewandten Seite mit einer wasserdichten Folie beschichtet.

In den Figuren 4 und 5 ist jeweils ein weiteres Ausführungsbeispiel gezeigt, das sich von dem Verkleidungselement aus Figur 1 durch eine geänderte Befestigungsvorrichtung unterscheidet.

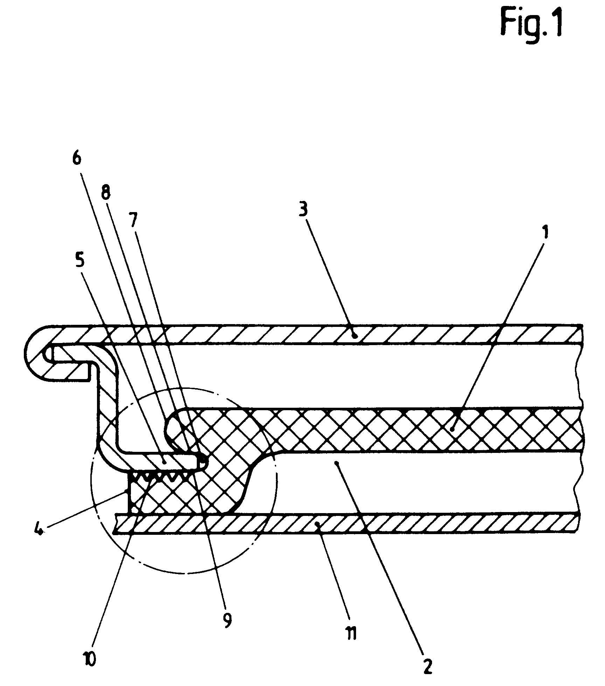

In den Figuren 1 bis 3 ist jeweils ein Ausführungsbeispiel des erfindungsgemäßen Verkleidungselements gezeigt, daß aus einem Schaumstoffkörper 1 besteht, der in der Öffnung 2 eines Hohlkörpers 3, der als Fahrzeugtür ausgebildet ist, befestigt ist. Die in Richtung des Innenraums angeordnete Öffnung 2 der Fahrzeugtür ist von einer umfangsseitigen Begrenzung 5 umschlossen, die mit einer als Nut 7 ausgebildeten Befestigungsvorrichtung 4 des Schaumstoffkörpers formschlüssig und dichtend in Eingriff ist. Die Nut 7 ist in der Umfangsseite 6 des Schaumstoffkörpers 1 angeordnet und weist ein im wesentlichen U-förmiges Profil auf. Zur Vereinfachung der Montage ist die innerhalb der Öffnung 2 angeordnete Begrenzungsfläche 8 der Nut kürzer ausgebildet, als die in Richtung der Innenraumverkleidung 11 angeordnete Begrenzungsfläche 9. Die Nut 7 umschließt die Begrenzung 5 unter elastischer Vorspannung anliegend, wobei die Begrenzungsfläche 9 der Nut 7 mit mehreren zueinander benachbarten Dichtlippen 10 versehen ist.

In Figur 1 bewirken die einander benachbarten Dichtlippen 10 eine zuverlässige Abdichtung der Öffnung 2 gegenüber der Innenraumverkleidung 11. Außerdem werden akustisch störende Schwingungen, die über die Karosserie ins Türinnenteil gelangen und überwiegend durch die Räder, den Motor oder den Fahrtwind verursacht werden, isoliert.

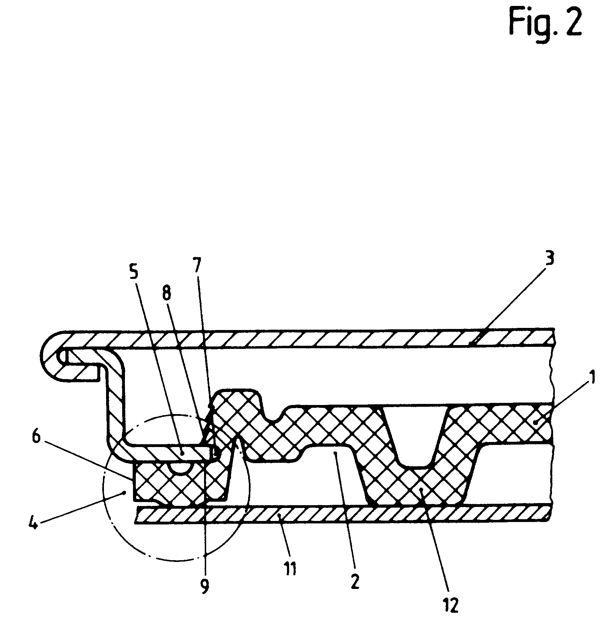

In Figur 2 ist ein zweites Ausführungsbeispiel gezeigt, das sich von dem Ausführungsbeispiel aus Figur 1 durch eine geänderte Befestigungsvorrichtung unterscheidet. Der Schaumstoffkörper 1 ist einschnappbar in die Öffnung 2 ausgebildet, wobei die Oberfläche des Schaumstoffkörpers 1 auf der der Begrenzung 5 zugewandten Seite mit widerhakenförmigen Vorsprüngen versehen ist. In diesem Ausführungsbeispiel ist der Schaumstoffkörper flächig an der Begrenzung 5 des Hohlkörpers 3 abgestützt. Außerdem berührt der Schaumstoffkörper 1 die Innenraumverkleidung 11 mit topfförmigen Vorsprüngen, die als Abstandhalter 12 ausgebildet sind. Durch diese Ausgestaltung ist stets eine übereinstimmende Zuordnung von Hohlkörper 3, Schaumstoffkörper 1 und Innenraumverkleidung 11 relativ zueinander gewährleistet, wodurch übereinstimmende Gebrauchseigenschaften währen der gesamten Gebrauchsdauer bedingt sind.

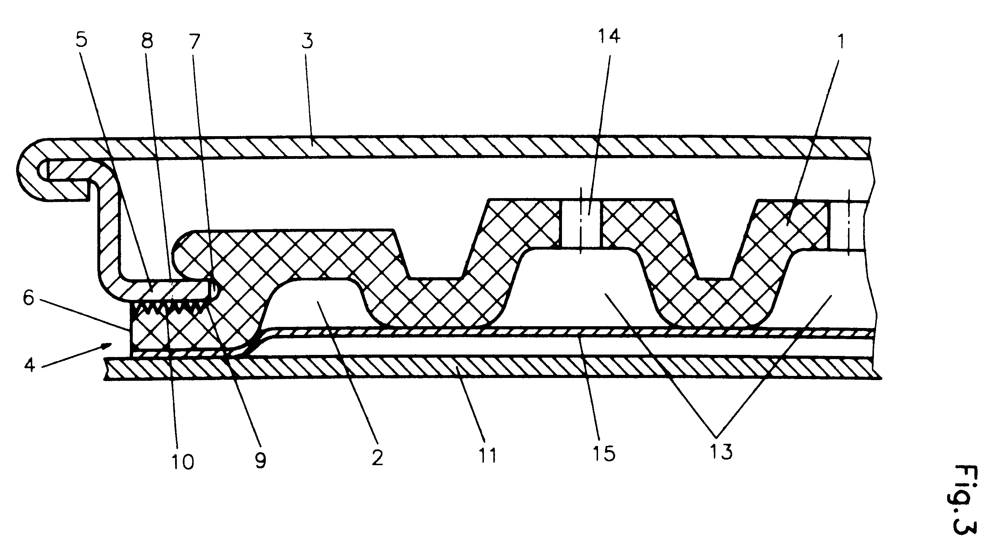

In Figur 3 ist ein drittes Ausführungsbeispiel gezeigt, wobei die Befestigungsvorrichtung 4 im wesentlichen dem Ausführungsbeispiel aus Figur 1 entspricht. Der Schaumstoffkörper ist, ähnlich wie in Figur 2, mit topfförmigen Vorsprüngen versehen, die zur Verbesserung der Schallabsorbtion als Helmholtzresonatoren ausgebildet sind. Das Volumen, das die einander benachbarten Helmholtzresonatoren jeweils umschließen, ist abweichend von einander, ebenso wie der Öffnungsquerschnitt der Durchbrechungen. Durch diese Ausgestaltung können Schallschwingungen voneinander abweichenden Frequenzen absorbiert werden. Der Schaumstoffkörper 1 ist auf der der Innenraumverkleidung 11 zugewandten Seite mit einer einstückig angeformten Folie adhäsiv verbunden. Durch diese Ausgestaltung ist sichergestellt, daß die Innenraumverkleidung 11 vor Feuchtigkeit, die sich innerhalb des Hohlkörpers 3 befindet, geschützt ist.

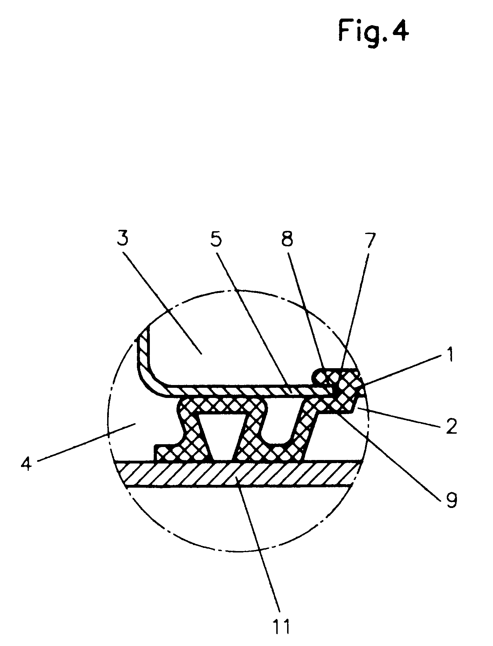

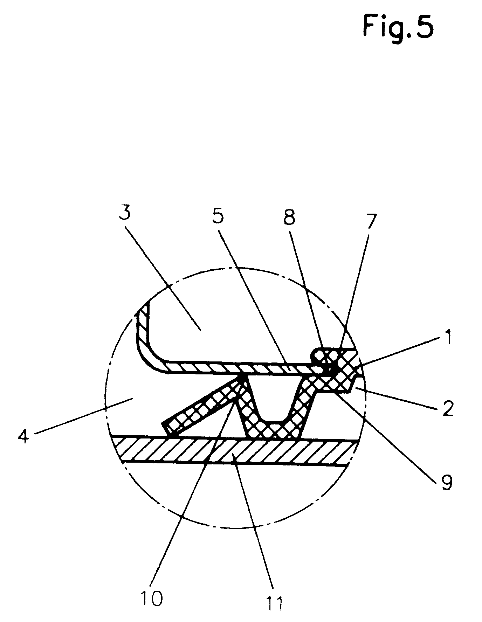

In den Figuren 4 und 5 sind zwei weitere Beispiele einer Befestigungsvorrichtung 4 gezeigt, die anstelle der zuvor gezeigten Befestigungsvorrichtungen in den Figuren 1 bis 3 zur Anwendung gelangen können. In Figur 4 ist der Schaumstoffkörper 1 mit einer schwalbenschwanzförmigen Abstützung zwischen der Begrenzung 5 und der Innenraumverkleidung 11 unter elastischer Vorspannung angeordnet. Durch die großen Auflageflächen von Begrenzung 5 und Innenraumverkleidung 11 an der Befestigungsvorrichtung 4 ist eine besonders exakte räumliche Zuordnung der Nut und eine dichte Verbindung von der Begrenzung 5 relativ zur Nut gewährleistet.

Ein weiteres Ausführungsbeispiel einer Befestigungsvorrichtung 4 ist in Figur 5 gezeigt. Abweichend von dem Ausführungsbeispiel aus Figur 4 berührt der Schaumstoffkörper 1 nur die Innenraumverkleidung 11 in einem Teilbereich seiner Erstreckung flächig anliegend. Auf der Begrenzung 5 ist der Schaumstoffkörper 1 mit einer Dichtlippe 10 abgestützt. Zusätzlich zu der flächigen Abstützung auf der Innenraumverkleidung 11 ist die Befestigungsvorrichtung mit einer Vorschaltdichtung versehen, die dem flächig anliegenden Bereich mit Abstand benachbart zugeordnet ist. Verunreinigungen aus der Umgebung können dadurch nicht in den Hohlraum zwischen der Innenraumverkleidung 11 und dem Schaumstoffkörper 1 eindringen.

## Patentansprüche

1. Verkleidungselement zur Isolierung akustisch störender Schwingungeumfassend einen geschlossenzelligen Schaumstoffkörper zum Verschließen eines auf zumindest einer Seite mit einer Öffnung versehenen Hohlkörpers, wobei der Schaumstoffkörper eine Befestigungsvorrichtung aufweist und an dem Hohlkörper festlegbar ist, dadurch gekennzeichnet, daß der Schaumstoffkörper (1) eine an die Form der Öffnung (2) angepaßte Gestalt aufweist und auf der der Begrenzung (5) der Öffnung (2) zugewandten Umfangsseite (6) die Befestigungsvorrichtung (4), daß die Befestigungsvorrichtung (4) durch eine in sich geschlossen umlaufende, in Richtung der Begrenzung (5) offene Nut (7) gebildet ist und daß die Nut (7) und die Begrenzung (5) dichtend und formschlüssig miteinander in Eingriff bringbar sind.

2. Verkleidungselement nach Anspruch 1, dadurch gekennzeichnet, daß die Nut (7) ein im wesentlichen U-förmiges Profil aufweist und daß zumindest eine ihrer einander zugewandten Begrenzungsflächen (8, 9) zumindest eine Dichtlippe (10) aufweist, die die Öffnung (2) des Hohlkörpers (3) dichtend umschließt.

3. Verkleidungselement nach Anspruch 1 bis 2, dadurch gekennzeichnet, daß der Schaumstoffkörper (1) auf der dem Hohlkörper (3) abgewandten Seite mit einem Bestandteil einer Innenraumverkleidung (11) eines Fahrzeugs verbunden ist.

4. Verkleidungselement nach Anspruch 3, dadurch gekennzeichnet, daß der Schaumstoffkörper (1) und die Innenraumverkleidung (11) eine vormontierbare Einheit bilden und gemeinsam in den Hohlkörper (3) einschnappbar sind.

5. Verkleidungselement nach Anspruch 3 bis 4, dadurch gekennzeichnet, daß der Schaumstoffkörper (1) und die Innenraumverkleidung (11) einander mit Abstand benachbart zugeordnet sind und daß der Schaumstoffkörper (1) einstückig angeformte Abstandhalter (12) aufweist, die die Innenraumverkleidung (11) unter elastischer Vorspannung anliegend berühren.

6. Verkleidungselement nach Anspruch 5, dadurch gekennzeichnet, daß die Abstandhalter (12) zur Bildung von Helmholzresonatoren (13) topfförmig gestaltet sind, daß die einander benachbarten Helmholzresonatoren (13) von einander abweichende Volumina umschließen und mit Durchbrechungen (14) von einander abweichender Größe versehen sind.
